**Europäisches Patentamt**

**European Patent Office**

**Office européen des brevets**

(11) Numéro de publication : **0 497 250 B1**

(12) **FASCICULE DE BREVET EUROPEEN**

(45) Date de publication du fascicule du brevet :
21.06.95 Bulletin 95/25

(51) Int. Cl.⁶ : **H04B 1/10, H04L 1/24**

(21) Numéro de dépôt : **92101288.6**

(22) Date de dépôt : **27.01.92**

(54) **Procédé de détection de signal perturbateur pour démodulateur de données numériques et dispositif de mise en oeuvre d'un tel procédé.**

(30) Priorité : **31.01.91 FR 9101078**

(43) Date de publication de la demande :
**05.08.92 Bulletin 92/32**

(45) Mention de la délivrance du brevet :
**21.06.95 Bulletin 95/25**

(84) Etats contractants désignés :
**CH DE ES FR GB IT LI NL SE**

(56) Documents cités :
**WO-A-85/04999**
**US-A- 4 100 531**
**US-A- 4 380 082**

(73) Titulaire : **ALCATEL TELSPACE**
**5, rue Noel Pons**
**F-92734 Nanterre Cédex (FR)**
(84) **DE ES FR GB IT NL SE**

Titulaire : **ALCATEL N.V.**
**Strawinskylaan 341,**
**(World Trade Center)**
**NL-1077 XX Amsterdam (NL)**
(84) **CH LI**

(72) Inventeur : **Sadot, Philippe**
**5, Passage Bullourde**
**F-75011 Paris (FR)**
Inventeur : **Thebault, Bertrand**
**25-27, avenue Faidherbe**
**F-92600 Asnière (FR)**
Inventeur : **Darmon, Marx**
**21, rue Barbet de Jouy**
**F-75007 Paris (FR)**
Inventeur : **Eudes, Jacques**
**Le Belloy**
**F-78600 Mesnil le Roi (FR)**

(74) Mandataire : **Weinmiller, Jürgen et al**
**Lennéstrasse 9**
**Postfach 24**
**D-82336 Feldafing (DE)**

## Description

L'invention concerne un procédé de détection de signal perturbateur pour un démodulateur de données numériques et un dispositif de mise en oeuvre d'un tel procédé.

Dans tout système de transmission à base de modulation numérique la transmission peut être perturbée par des signaux perturbateurs au sens large, c'est-à-dire :

- soit par d'autres systèmes de transmission,
- soit par des brouilleurs.

Pour détecter de tels signaux perturbateurs une solution de l'art connu, comme décrit dans le brevet français n° 2538645 (numéro d'enregistrement national 82 21 875, déposé le 28/12/1982), consiste à détecter l'énergie reçue en dehors de la bande de modulation par un filtre passe-haut de fréquence de coupure au moins égale à la fréquence la plus haute de la bande de modulation. Mais un tel dispositif, qui est efficace pour des signaux perturbateurs à bande large, fonctionne mal avec des signaux perturbateurs à bande étroite : Dans ce cas en effet, un signal de fréquence voisine étant détecté, on considère que le signal reçu est perturbé alors qu'il ne l'est pas.

La demande de brevet international WO 85/04999 décrit un dispositif d'acquisition de synchronisation temporelle pour une transmission à étalement de spectre par séquence directe. L'insertion de symboles de référence dans la séquence reçue permet de faire fonctionner un égaliseur temporel compensant le bruit de la liaison de transmission. Cette demande de brevet ne concerne pas la détection d'un signal perturbateur et n'a pas pour objectif d'adopter des contre-mesures.

L'invention propose un procédé de détection de signal perturbateur pour démodulateur de données numériques, caractérisé en ce que cette détection de signal a lieu sur le signal modulé transposé en bande de base grâce à l'insertion de manière périodique de symboles de référence, au moyen d'un retard apporté sur les signaux reçus d'un temps de garde fixé avant démodulation, et en ce que ledit procédé comporte :

- une étape d'estimation du carré du module de l'intercorrélation du signal reçu avec le signal attendu à un instant déterminé où les symboles de référence sont supposés présents;
- une étape d'estimation du carré de la corrélation du signal reçu au même instant, de multiplication par un coefficient qui représente le carré du seuil de l'estimé du coefficient de corrélation, et de multiplication par le nombre de symboles de référence utilisés dans une séquence de référence.
- une étape de comparaison, l'une par rapport à l'autre, des quantités obtenues simultanément lors des deux étapes précédentes.

En retardant le signal reçu d'un temps de garde fixé avant démodulation, le procédé de l'invention permet une reconnaissance instantanée d'une composante non propre au signal émis par un traitement appropriée du signal reçu avant démodulation et donc une détection de la présence ou de l'absence d'un signal perturbateur afin de se prémunir de ses nuisances. On peut alors déclencher une procédure de durcissement des systèmes de synchronisation du démodulateur, et éventuellement la mise en route d'un réjecteur de signal pertubateur.

L'invention propose, en outre, un dispositif de mise en oeuvre de ce procédé qui comprend :

- un premier circuit de mise en forme du signal d'entrée en fréquence intermédiaire, de transposition de ce signal en bande de base et d'échantillonnage ;
- un second circuit de synchronisation et de mise en forme de symboles de référence ;
- un troisième circuit de détection de la présence de signaux perturbateurs comprenant :
  - des moyens d'estimation du carré du module de l'intercorrélation du signal reçu avec le signal attendu à un instant déterminé où les symboles de référence sont supposés présents ;
  - des moyens d'estimation du carré de la corrélation du signal reçu au même instant, de multiplication par un coefficient qui représente le carré du seuil de l'estimé du coefficient de corrélation, et de multiplication par le nombre de symboles de référence utilisés dans une séquence de référence ;
  - des moyens de comparaison, l'une par rapport à l'autre, des quantités obtenues simultanément par lesdits deux moyens d'estimation ;
- un quatrième circuit de démodulation en bande de base.

Avantageusement le second circuit comprend :

- un circuit de synchronisation d'une séquence de référence;
- un générateur de l séquences binaires;
- un circuit de codage de ces séquences.

Avantageusement le troisième circuit comprend deux voies, qui reçoivent le signal modulé en bande de base et qui attaquent les deux entrées d'un comparateur;

la première voie comportant successivement :

- un circuit multiplieur qui reçoit sur sa seconde entrée les signaux de sortie du circuit de codage;

- un circuit sommateur-accumulateur complexe, remis à zéro à chaque début de bloc;
- un circuit de calcul du carré du module comportant un élément de conjugaison et un circuit multiplieur; la seconde voie comportant :
- un circuit de calcul du carré du module comportant un élément de conjugaison et un circuit multiplieur;
- un circuit sommateur-accumulateur réel;
- un circuit multiplieur par une constante.

Avantageusement le quatrième circuit comprend un circuit de retard situé avant le démodulateur.

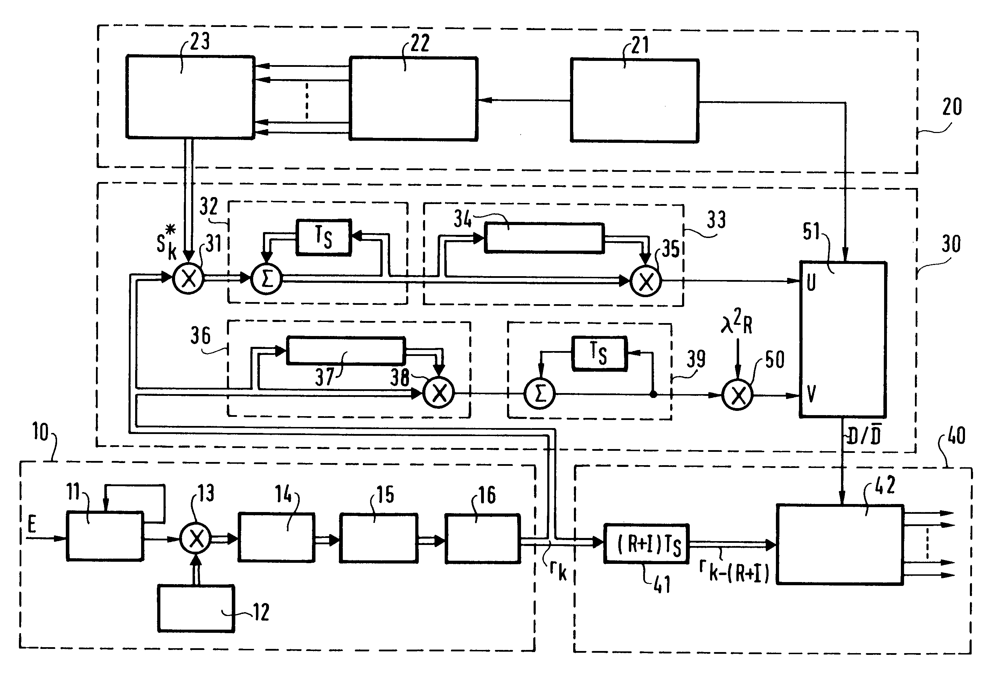

Les caractéristiques et avantages de l'invention ressortiront d'ailleurs de la description qui va suivre, à titre d'exemple non limitatif, en référence à la figure annexée qui illustre schématiquement le dispositif de l'invention.

Les dispositifs classiques de transposition de fréquence, de filtrage, d'amplification, et de conversion analogique numérique sont les éléments nécessaires au traitement du "signal reçu" $r_k$.

$r_k$ correspond à la représentation d'un signal reçu en bande de base, échantillonné au temps symbole $T_s$,

$$r_k = r(kT_s) = \sqrt{S}s_k + z_k$$

J est la puissance du brouilleur

S est la puissance du signal.

$s_k$ est la représentation en bande de base du symbole émis à l'instant $kT_s$.

$z_k$ est la représentation du signal brouilleur

avec $E(|z|^2) = J$ et $E(|s|^2) = 1$.

La contrainte essentielle au bon fonctionnement d'un tel dispositif est l'insertion de R symboles de référence (connus du récepteur à priori) tous les I symboles d'information, pour former des blocs de R+ I symboles. Soit $L = 2^I$ le nombre de symboles possibles pour la modulation considérée (MDP2 : I = 1, MDP4 : I=2, MAQ16 : I = 4, etc...). Les R symboles de référence peuvent être identiques pour chaque bloc, ou bien être construits à partir de I séquences pseudo-aléatoires de période $N= 2^m-1$ telle que $m \gg R$.

Soit $\rho$ le module du coefficient de corrélation du signal reçu avec le signal émis :

s* désigne le complexe conjugué de s; la représentation d'une modulation numérique en bande de base nécessitant, en effet, une représentation par des nombres complexes.

E désigne l'espérance mathématique.

Lorsque le signal reçu est égal au signal émis (ni bruit ni perturbateur) $\rho = 1$, et si le signal reçu est totalement décorrélé du signal émis $\rho = 0$.

On note que si $E(s) = 0$, en fixant arbitrairement $E(|s|^2)= 1$, on obtient :

$$\rho = \frac{|E(r.s*)|}{\sqrt{E(|r|^2)}}$$

Si le signal perturbateur z est un signal tel que $E(z) = 0$ et $E(s.z) = 0$, on obtient :

$$\rho = \frac{S}{\sqrt{S+J}} = \frac{S/J}{\sqrt{1+S/J}}$$

Dans le procédé de l'invention on se fixe un rapport signal à brouilleur qui détermine la valeur $\lambda$ du coefficient de corrélation en dessous de laquelle on considère qu'un signal perturbateur est présent et au dessus de laquelle on considère qu'il est absent (ou non destructif). Par exemple pour $(S/J)dB = 0$ on obtient $\lambda = \frac{\sqrt{2}}{2}$

On construit alors un estimateur du module du coefficient de corrélation modifié $\alpha$, calculé à chaque bloc sur les seuls symboles de référence, en considèrant chaque début de bloc comme origine des temps.

$$\alpha = \frac{|\widehat{cov}(r.s)|}{\sqrt{\widehat{E}(|r|^2) . var(s)}}$$

En présence d'un brouilleur à bande étroite de forte puissance, le signal reçu s'écrit :

$$r_k = \sqrt{S}s_k + \sqrt{J} \exp(j\theta_k) \simeq \sqrt{J} \exp(j\theta_k)$$

avec $J \gg S$ $\theta_k$ étant considérée usuellement comme une variable aléatoire uniformément répartie sur $|-\pi,+\pi|$; Si l'on observe cette variable aléatoire sur R symboles, typiquement une dizaine, il est raisonnable de considérer la variable $\theta_k$ comme constante, ainsi :

$$r_k = \sqrt{J} \exp(j\theta)$$

L'estimée de la variance étant nulle sur un intervalle d'observation court, on peut remplacer l'estimation de la variance du signal reçu par l'estimation de sa puissance. La variance étant bornée par sa puissance on ne fait, par ce changement, que diminuer l'estimée du coefficient de corrélation, ce qui entraîne une diminution de la probabilité de non-détection.

Pour simplifier la description du dispositif de mise en oeuvre du procédé de l'invention représenté sur la figure, on considère le cas simple où les symboles de référence sont identiques sur chaque bloc.

La possibilité d'utiliser des séquences pseudo-aléatoires de grande taille pour rendre impossible le repérage de la séquence de référence permet une détection pour tout type de signal perturbateur.

La description du modèle simplifié permet une bonne compréhension du dispositif, et l'extrapolation au cas plus général, où l'on utilise une séquence pseudo-aléatoire, est immédiate.

La séquence fixe est choisie telle que :

$$E\ (s)\ =\ \frac{\sum_{k=0}^{R-1} s_k}{R}\ =\ 0$$

Ce qui impose de faire le calcul sur un nombre R pair de symboles.

Les calculs portent sur $\alpha^2$ pour éviter le calcul d'une racine carrée. La division étant à éviter pour une réalisation en logique câblée ou microprogrammée, on préfère comparer les quantités U et V, avec $\alpha^2 = U/V$ , les développements de ces quantités étant obtenus en supposant que :

$$\sum_{k=0}^{R-1} r_k\ /\ R\ =\ 0 ; U\ =\ \left| \sum_{k=0}^{R-1} r_k s_k^* \right|^2$$

$$V\ =\ \lambda^2 \sum_{k=0}^{R-1} \left( |s_k|^2 - \frac{\left| \sum_{k=0}^{R-1} s_k \right|^2}{R} \right) \cdot \sum_{k=0}^{R-1} |r_k|^2\ =\ \lambda^2 R \sum_{k=0}^{R-1} |r_k|^2$$

et décider de la présence d'un signal perturbateur si $V > U$, de l'absence d'un signal perturbateur si $V \leq U$.

La quantité U correspond donc, au carré du coefficient d'intercorrélation des symboles de référence reçus $s_k^*$ avec le signal reçu $r_k$ à un instant déterminé où les symboles de référence sont supposé présent.

La quantité V correspond, donc, au carré de la corrélation du signal reçu $r_k$ au même instant, multiplié par un coefficient $\lambda^2$ qui représente le carré du seuil de l'estimé du coefficient de corrélation et multiplié par le nombre R de symboles référence utilisés dans une salve de référence.

Sur la figure pour permettre une représentation du dispositif de l'invention, on utilise la convention suivante :

- les signaux réels sont illustrés avec des traits simples.
- les signaux complexes sont illustrés avec des traits doubles.

Le système de modulation, qui ne possède pas de particularité si ce n'est que l'on insère R symboles de référence (typiquement une dizaine) tous les I symboles d'informations (typiquement plusieurs dizaines), est bien connu de l'homme de l'art.

Le dispositif de l'invention, tel que représenté sur la figure, comporte :

- un premier circuit 10 de mise en forme du signal d'entrée E en fréquence intermédiaire, de transposition de ce signal en bande de base, et d'échantillonnage .
- un second circuit 20 de synchronisation et de mise en forme de signaux références.
- un troisième circuit 30 de détection de la présence de signaux perturbateurs, à proprement parler.
- un quatrième circuit 40 de démodulation en bande de base.

Les troisième et quatrième circuits reçoivent le signal sortant du premier circuit.

Le troisième circuit 30, qui reçoit également les séquences de sortie du second circuit, délivre un signal $D/\overline{D}$ de détection des signaux perturbateurs envoyés au quatrième circuit 40 pour intervenir, éventuellement, au niveau de la démodulation (42).

Le premier circuit 10 comprend successivement :
- un circuit 11 de commande automatique de gain;
- un circuit de multiplication analogique 13 des voies en phase et en quadrature de phase par un signal de fréquence F issu d'un oscillateur local 12,
- un filtre passe-bas 14 sur chaque voie;
- un convertisseur analogique-numérique 15 sur chaque voie;
- et un filtre adapté 16 qui délivre un signal modulé transposé en bande de base $r_k$.

Le second circuit 20 comprend successivement :
- un circuit 21 de synchronisation d'une séquence de référence;
- un générateur 22 de I séquences binaires;
- un circuit de codage 23 de ces séquences.

Le troisième circuit 30 comprend deux voies qui reçoivent le signal modulé en bande de base $r_k$ et qui attaquent les deux entrées d'un comparateur 51;

la première voie comportant successivement :
- un circuit multiplieur 31 qui reçoit sur sa seconde entrée les signaux de sortie ($s_k$*) du circuit de codage 23,
- un circuit sommateur-accumulateur complexe 32, remis à zéro à chaque début de bloc ($T_S$ étant un délai égal au temps symbole);
- un circuit 33 de calcul du carré du module de

$$\sum_k r_k s_k^*$$

comportant un élément de conjugaison 34 et un circuit multiplieur 35 qui génère la quantité U à un instant référence de chaque bloc;

la seconde voie comportant :
- un circuit 36 de calcul du carré du module de $r_k$ comportant un élément de conjugaison 37 et un circuit multiplieur 38;
- un circuit sommateur-accumulateur réel 39;
- un circuit multiplieur 50 par une constante $\lambda^2 R$, qui délivre la quantité V à l'instant référence de chaque bloc.

Le quatrième circuit 40 comprend un circuit de retard 41 d'un délai égal à $(R+I)T_s$ suivi du démodulateur 42.

Le premier circuit 10 permet d'obtenir le signal $r_k$ à partir d'un signal analogique de fréquence plus importante. La configuration de ce circuit 10 illustrée sur la figure n'est pas unique, elle est toutefois classique. L'oscillateur local 12, qui est libre, génère une sinusoïde en phase et une autre en quadrature. Après multiplication analogique 13 des voies en phase et en quadrature, un filtre passe-bas 14 disposé sur chaque voie, permet d'éliminer les fréquences doubles. Le signal est alors numérisé à l'aide du convertisseur analogique numérique 15 disposé sur chaque voie, à un rythme supérieur au double de la fréquence des symboles. Le filtre adapté 16 délivre alors les symboles reçus $r_k$.

Dans le second circuit 20, qui est un circuit de contrôle du dispositif, la synchronisation de la référence 21 consiste à repérer le début et la fin de la séquence de référence. Elle génère un signal d'autorisation de génération de séquence pour le générateur de séquences binaires 22 ainsi qu'une commande de validation de la comparaison pour le comparateur 51 à la fin de chaque séquence de référence. De plus des commandes de remise à zéro sont envoyées aux circuits accumulateurs 32 et 39 au début de chaque bloc.

Le générateur 22 de I séquences binaires réalise la lecture d'une mémoire séquencée, puisque les séquences sont fixes. (Dans le cas non représenté où l'on a des séquences pseudo-aléatoires il suffit d'implémenter I boucles de N registres à décalage.) A partir de ces I séquences sont générées en 23 les symboles de références conjugués $s_k^*$.

Le troisième circuit 30 est le coeur de l'invention puisqu'il permet de calculer les quantités U et V puis de les comparer. $r_k$ est multiplié en 31 à $s_k^*$. Puis on additionne les produits successifs dans un sommateur accumulateur complexe 32. Enfin on calcule le carré du module dans le circuit 33, qui génère la quantité en U au seul instant référence de chaque bloc. D'autre part, on calcule le carré du module de $r_k$ en 36 et on somme les modules successifs grâce au sommateur accumulateur réel 39. Après multiplication (50) par la constante $\lambda^2 R$, on obtient la quantité V à l'instant référence. Le comparateur 51 assure à l'instant référence de chaque bloc la détection D d'un signal perturbateur si V > U et la non-détection $\overline{D}$ dans le cas contraire. Cette décision est mémorisée jusqu'à celle du bloc suivant.

Le quatrième circuit 40 concerne le retard 41 apporté au signal $r_k$, et la démodulation 42.

Le calcul de la détection étant effectué tous les R+I symboles il est probable, que lorsque l'on détecte un signal perturbateur, celui-ci est apparu entre la dernière détection et la nouvelle; c'est-à-dire à une position quelconque parmi les R+1 symboles passés. Pour cela le retard 41 de R+I symboles est nécessaire avant la démodulation 42 pour que la détection puisse être considérée comme instantanée.

Les caractéristiques du procédé de l'invention sont donc les suivantes :
- Une détection de présence sans délai sur le signal modulé, offrant la possibilité d'utilisation d'une procédure de durcissement de la démodulation ou de réjection de signal perturbateur avant que ce signal perturbateur n'ait pu mettre en déroute le démodulateur;
- une détection de l'absence de signal perturbateur sans délai, à une restriction près : la synchronisation référence ne devant pas avoir été attaquée par le signal perturbateur;
- Une probabilité de non détection qui peut être arbitrairement diminuée au prix d'une perte de débit d'information (on augmente R avec R+I fixe) ou au prix d'un retard de démodulation (on augmente R et I d'un même rapport).

La combinaison de l'invention avec l'observation de la tension de commande automatique de gain, permet aussi de réduire la probabilité de non-détection sans perte de débit d'information.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

L'utilisation d'un comparateur 51 de type "à hystérésis", de par la prise en compte des décisions passées, permet de fiabiliser la détection.

Dans le calcul de l'estimée du coefficient de corrélation on a remplacé la variance du signal reçu par sa puissance, toutefois il est possible de conserver la forme originelle de cette estimée. En effet, le cas où la variance du signal reçu est nulle ou inférieure à un seuil infinitésimal peut être considéré comme un cas particulier où l'on est en présence d'un signal perturbateur; un traitement d'exception devant alors être appliqué. Ce qui se traduit pour la réalisation du dispositif de l'invention au remplacement du comparateur à un seuil, par un comparateur plus sophistiqué permettant de détecter la présence d'un signal perturbateur lorsque le coefficient est inférieur au seuil prédéterminé ou lorsque la variance du signal est en dessous d'un second seuil.

## Revendications

1. Procédé de détection de signal pertubateur pour démodulateur de données numériques, caractérisé en ce que cette détection de signal perturbateur a lieu sur le signal modulé transposé en bande de base grâce à l'insertion de manière périodique de symboles de référence connus (R) au moyen d'un retard apporté sur les signaux reçus d'un temps de garde $((R+I)T_s)$fixé avant démodulation, et en ce que ledit procédé comporte :
   - une étape d'estimation du carré du module de l'intercorrélation du signal reçu avec le signal attendu, à un instant déterminé où les symboles de référence sont supposés présents;
   - une étape d'estimation du carré de la corrélation du signal reçu au même instant, de multiplication par un coefficient (12) qui représente le carré du seuil de l'estimé du coefficient de corrélation et de multiplication par le nombre (R) de symboles de référence utilisés dans une salve de référence.
   - une étape de comparaison l'une par rapport à l'autre des quantités obtenues simultanément lors des deux étapes précédentes.

2. Dispositif de mise en oeuvre du procédé selon la revendication 1, caractérisé en ce qu'il comprend :
   - un premier circuit (10) de mise en forme du signal d'entrée en fréquence intermédiaire, de transposition de ce signal en bande de base et d'échantillonnage ;
   - un second circuit (20) de synchronisation et de mise en forme de symboles de référence ;
   - un troisième circuit (30) de détection de la présence de signaux perturbateurs comprenant :
      - des moyens d'estimation du carré du module de l'intercorrélation du signal reçu avec le signal attendu à un instant déterminé où les symboles de référence sont supposés présents ;
      - des moyens d'estimation du carré de la corrélation du signal reçu au même instant, de multiplication par un coefficient qui représente le carré du seuil de l'estimé du coefficient de corrélation, et de multiplication par le nombre de symboles de référence utilisés dans une séquence de référence ;
- des moyens de comparaison, l'une par rapport à l'autre, des quantités obtenues simultanément par lesdits deux moyens d'estimation ;
- un quatrième circuit (40) de démodulation en bande de base.

3. Dispositif selon la revendication 2, caractérisé en ce que le second circuit (20) comprend successivement :
- un circuit (21) de synchronisation d'une séquence de référence;
- un générateur (22) de l séquences binaires;
- un circuit de codage (23) de ces séquences.

4. Dispositif selon la revendication 3, caractérisé en ce que les séquences sont de nature pseudo-aléatoire.

5. Dispositif selon la revendication 3, caractérisé en ce que le troisième circuit (30) comprend deux voies qui reçoivent le signal modulé en bande de base ($r_k$) et qui attaquent les deux entrées d'un comparateur (51);
la première voie comportant successivement :
- un circuit multiplieur (31) qui reçoit sur sa seconde entrée les signaux de sortie ($s_k^*$) du circuit de codage (23);
- un circuit sommateur-accumulateur complexe (32), remis à zéro à chaque début de bloc;
- un circuit (33) de calcul du carré du module comportant un élément de conjugaison (34) et un circuit multiplieur (35);
la seconde voie comportant :
- un circuit (36) de calcul du carré du module comportant un élément de conjugaison (37) et un circuit multiplieur (38);
- un circuit sommateur-accumulateur réel (39);
- un circuit multiplieur (50) par une constante ($\lambda^2R$).

6. Dispositif selon la revendication 5, caractérisé en ce que le comparateur (51) est un comparateur à "hystérésis".

7. Dispositif selon la revendication 3, caractérisé en ce que le quatrième circuit (40) comprend un circuit de retard (41) suivi d'un démodulateur (42).

## Patentansprüche

1. Verfahren zur Erkennung von Störsignalen für einen Demodulator digitaler Daten, dadurch gekennzeichnet, daß diese Störsignalerkennung am modulierten, ins Basisband transponierten Signal aufgrund der periodischen Einfügung von bekannten Bezugssymbolen (R) mit Hilfe einer die empfangenen Signale um eine vor der Demodulation festgesetzte Zeit (($R+l)T_s$) verzögernden Schaltung erfolgt, und daß das Verfahren aufweist:
- einen Verfahrensschritt des Abschätzens des Quadrats des Interkorrelationsmoduls zwischen dem empfangenen Signal und dem erwarteten Signal in einem bestimmten Zeitpunkt, in dem die Bezugssymbole als vorhanden angenommen werden;
- einen Verfahrensschritt des Abschätzens des Quadrats der Korrelation des im gleichen Zeitpunkt empfangenen Signals, der Multiplikation mit einem Koeffizienten (12), der das Quadrat des Schwellenwerts des Schätzwerts des Korrelationskoeffizienten darstellt, und der Multiplikation mit der Anzahl (R) der Bezugssymbole, die in einem Bezugsburst verwendet werden, und
- einen Verfahrensschritt des Vergleichens der während der beiden vorhergehenden Schritte gleichzeitig erhaltenen Größen.

2. Vorrichtung zur Durchführung des Verfahrens nach Anspruch 1, dadurch gekennzeichnet, daß sie aufweist:
- eine erste Schaltung (10) zum Formen des Zwischenfrequenz-Eingangssignals, zum Transponieren dieses Signals in das Basisband und zum Tasten,
- eine zweite Schaltung (20) zum Synchronisieren und Formen von Bezugssymbolen,

- eine dritte Schaltung (30) zum Erkennen des Vorhandenseins von Störsignalen, wobei diese Schaltung aufweist:
  - Mittel zum Abschätzen des Quadrats des Interkorrelationsmoduls zwischen dem empfangenen Signal und dem erwarteten Signal in einem bestimmten Zeitpunkt, in dem die Bezugssymbole als vorhanden angenommen werden;
  - Mittel zum Abschätzen des Quadrats der Korrelation des im gleichen Zeitpunkt empfangenen Signals, zur Multiplikation mit einem Koeffizienten (12), der das Quadrat des Schwellenwerts des Schätzwerts des Korrelationskoeffizienten darstellt, und zur Multiplikation mit der Anzahl (R) der Bezugssymbole, die in einem Bezugsburst verwendet werden, und
  - Mittel zum Vergleichen der in den beiden Abschätzmitteln gleichzeitig erhaltenen Größen,
- eine vierte Schaltung (40) zum Demodulieren im Basisband.

3. Vorrichtung nach Anspruch 2, dadurch gekennzeichnet, daß die zweite Schaltung (20) nacheinander aufweist:
   - eine Schaltung (21) zum Synchronisieren eines Bezugsburst;
   - einen Generator (22) zum Erzeugen von I binären Bursts;
   - eine Schaltung (23) zum Kodieren dieser Bursts.

4. Vorrichtung nach Anspruch 3, dadurch gekennzeichnet, daß die Bursts Pseudozufallssequenzen sind.

5. Vorrichtung nach Anspruch 3, dadurch gekennzeichnet, daß die dritte Schaltung (30) zwei Kanäle aufweist, die das modulierte Signal ($r_k$) im Basisband empfangen und an die beiden Eingänge eines Komparators (51) angeschlossen sind,
   wobei der erste Kanal nacheinander aufweist:
   - eine Multiplizierschaltung (31), die an ihrem zweiten Eingang die Ausgangssignale ($s^*_k$) der Kodierschaltung (23) empfängt,
   - eine Schaltung (32) zum Summieren-Akkumulieren komplexer Größen, die bei jedem Blockanfang auf Null gesetzt wird,
   - eine Schaltung (33) zum Berechnen des Quadrats des Moduls, die ein Konjunktionselement (34) und eine Multiplizierschaltung (35) aufweist,
   wobei der zweite Kanal aufweist:
   - eine Schaltung (36) zum Berechnen des Quadrats des Moduls, die ein Konjunktionselement (37) und eine Multiplizierschaltung (38) aufweist,
   - eine Schaltung (39) zum Summieren-Akkumulieren reeller Größen,
   - eine Schaltung (50) zum Multiplizieren mit einer Konstanten ($\lambda^2 R$).

6. Vorrichtung nach Anspruch 5, dadurch gekennzeichnet, daß der Komparator (51) ein Komparator mit Hysterese ist.

7. Vorrichtung nach Anspruch 3, dadurch gekennzeichnet, daß die vierte Schaltung (40) eine Verzögerungsschaltung (41) aufweist, auf die ein Demodulator (42) folgt.

**Claims**

1. A method of detecting a disturbing signal for demodulating digital data, the method being characterized in that, on the modulated signal transposed into baseband, the disturbing signal is detected by periodically inserting known reference symbols (R) by means of a fixed guard time delay (($R + I)T_s$) applied to the received signal prior to demodulation, and in that said method includes:
   a step of estimating the square of the modulus of the cross-correlation of the received signal and of the expected signal at a determined instant when the reference symbols are assumed to be present;
   a step of estimating the square of the correlation of the received signal at the same instant, of multiplying by a coefficient (12) which represents the square of the threshold for the estimated correlation coefficient, and of multiplying by the number (R) of reference symbols used in a reference burst; and
   a step of comparing with each other the two quantities obtained simultaneously during the preceding two steps.

2. Apparatus for implementing the method of claim 1, characterized in that it comprises:
   a first circuit (10) for shaping the input signal at intermediate frequency, for transposing this signal to baseband, and for sampling it;

a second circuit (20) for synchronizing and shaping reference symbols;

a third circuit (30) for detecting the presence of disturbing signals comprising:

· means for estimating the square of the modulus of the cross-correlation of the received signal and of the expected signal at a determined instant when the reference symbols are assumed to be present;

· means for estimating the square of the correlation of the received signal at the same instant, of multiplying by a coefficient which represents the square of the threshold for the estimated correlation coefficient, and of multiplying by the number of reference symbols used in a reference burst; and

· means for comparing with each other the two quantities obtained simultaneously by said two estimating means; and

a fourth circuit (40) for baseband demodulation.

3. Apparatus according to claim 2, characterized in that the second circuit (20) comprises in succession:

a circuit (21) for synchronizing a reference sequence;

a generator (22) for generating $l$ binary sequences; and

an encoding circuit (23) for encoding said sequences.

4. Apparatus according to claim 3, characterized in that the sequences are pseudo-random in nature.

5. Apparatus according to claim 3, characterized in that the third circuit (30) comprises two paths both of which receive the baseband modulated signal ($r_k$) and each of which feeds a respective input of a comparator (51);

the first path comprising in succession:

a multiplier circuit (31) which receives on a second input the output signals ($s_k$)* from the encoding circuit (23);

a complex summing and accumulating circuit (32) which is reset to zero at the beginning of each block; and

a circuit (33) for calculating the square of the modulus and including a conjugating component (34) and a multiplying circuit (35);

the second path including:

a circuit (36) for calculating the square of the modulus and including a conjugating component (37) and a multiplier circuit (38);

a real summing and accumulator circuit (39); and

a multiplier circuit (50) for multiplying by a constant ($\lambda^2 R$).

6. Apparatus according to claim 5, characterized in that the comparator (51) is a "hysteresis" comparator.

7. Apparatus according to claim 3, characterized in that the fourth circuit (40) includes a delay circuit (41) followed by a demodulator (42).